# EUROPEAN PATENT APPLICATION

(11) **EP 4 790 986 A1**
(43) Date of publication of application: **12.08.2026**
(21) Application number: 24874964.0
(22) Date of filing: 04.10.2024
(51) Int. Cl.: H04N 19/105, H04N 19/11, H04N 19/593, H04N 19/51, H04N 19/176, H04N 19/70

(54) **IMAGE ENCODING/DECODING METHOD, BITSTREAM TRANSMISSION METHOD, AND RECORDING MEDIUM STORING BITSTREAM**

(30) Priority: 05.10.2023 US 202363542749 P
(71) Applicant: LG Electronics Inc., Seoul 07336 (KR)
(72) Inventor: ZHAO, Jie, Seoul 06772 (KR); KIM, Seung Hwan, Seoul 06772 (KR); TAN, Hendry, Seoul 06772 (KR)
(74) Representative: Jung, Minkyu
(86) International application number: PCT/KR2024/015049
(87) International publication number: WO 2025/075408

(57) **Abstract**

Provided are an image encoding/decoding method, a bitstream transmission method, and a computer-readable recording medium on which a bitstream is stored. An image decoding method according to the present disclosure may be an image decoding method performed by an image decoding device, the image decoding method comprising the steps of: obtaining an intra-prediction block of a current block and an inter-prediction block of the current block; determining an intra weight for the intra-prediction block and an inter weight for the inter-prediction block; and generating prediction samples of the current block by applying the intra weight to the intra-prediction block and applying the inter weight to the inter-prediction block, wherein the intra weight is determined and applied on a sample-by-sample basis within the intra-prediction block, and the inter weight is determined and applied on a sample-by-sample basis within the inter-prediction block.

## Description

### [Technical Field]

The present disclosure relates to an image encoding/decoding method, a method for transmitting a bitstream and a recording medium for storing a bitstream, and relates to combined inter and intra prediction (CIIP) based on a sample.

### [Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

### [Disclosure]

### [Technical Problem]

The present disclosure is to provide an image encoding/decoding method and apparatus with improved encoding/decoding efficiency.

In addition, the present disclosure is to propose CIIP based on a sample.

In addition, the present disclosure is to propose CIIP based on an extended intra prediction mode.

In addition, the present disclosure is to provide a non-transitory computer-readable recording medium for storing a bitstream generated by the image encoding method according to the present disclosure.

In addition, the present disclosure is to provide a non-transitory computer-readable recording medium for storing a bitstream which is received and decoded by the image decoding apparatus according to the present disclosure and used for image reconstruction.

In addition, the present disclosure is to provide a method for transmitting a bitstream which is generated by the image encoding method according to the present disclosure.

The technical problems to be achieved in the present disclosure are not limited to the technical problems described above, and other technical problems not described may be clearly understood by those of ordinary skill in the art from the following descriptions.

### [Technical Solution]

An image decoding method according to an aspect of the present disclosure is an image decoding method performed by an image decoding apparatus, and may be an image decoding method that includes obtaining an intra prediction block of a current block and an inter prediction block of the current block; determining an intra weight for the intra prediction block and an inter weight for the inter prediction block; and generating prediction samples of the current block by applying the intra weight to the intra prediction block and applying the inter weight to the inter prediction block, wherein the intra weight is determined and applied in a sample unit within the intra prediction block and the inter weight is determined and applied in a sample unit within the inter prediction block.

An image encoding method according to another aspect of the present disclosure is an image encoding method performed by an image encoding apparatus, and may be an image encoding method that includes obtaining an intra prediction block of a current block and an inter prediction block of the current block; determining an intra weight for the intra prediction block and an inter weight for the inter prediction block; and generating prediction samples of the current block by applying the intra weight to the intra prediction block and applying the inter weight to the inter prediction block, wherein the intra weight is determined and applied in a sample unit within the intra prediction block and the inter weight is determined and applied in a sample unit within the inter prediction block.

A computer-readable recording medium according to another aspect of the present disclosure may store a bitstream generated by the image encoding method or apparatus of the present disclosure.

A transmission method according to another aspect of the present disclosure may transmit a bitstream generated by the image encoding method or apparatus of the present disclosure.

The features briefly summarized above for the present disclosure are just an exemplary aspect of a detailed description for the present disclosure described below, and do not limit the scope of the present disclosure.

### [Advantageous Effects]

According to the present disclosure, an image encoding/decoding method and apparatus with improved encoding/decoding efficiency may be provided.

In addition, according to the present disclosure, prediction performance may be improved because CIIP is performed in a sample unit.

In addition, according to the present disclosure, prediction performance may be improved because the number of categories used to determine a CIIP weight increases.

In addition, according to the present disclosure, coding efficiency may be improved because an intra prediction mode used for CIIP is signaled more efficiently.

In addition, according to the present disclosure, a non-transitory computer-readable recording medium for storing a bitstream generated by the image encoding method according to the present disclosure may be provided.

According to the present disclosure, a non-transitory computer-readable recording medium for storing a bitstream which is received and decoded by the image decoding apparatus according to the present disclosure and used for image reconstruction may be provided.

In addition, according to the present disclosure, a method for transmitting a bitstream generated by the image encoding method may be provided.

The effects obtainable from the present disclosure are not limited to the effects described above, and other effects not described may be clearly understood by those of ordinary skill in the art from the following descriptions.

### [Brief Description of Drawings]

FIG. 1 shows a schematic diagram of a video coding system to which an embodiment according to the present disclosure may be applied.
FIG. 2 shows a schematic diagram of an image encoding apparatus to which an embodiment according to the present disclosure may be applied.
FIG. 3 shows a schematic diagram of an image decoding apparatus to which an embodiment according to the present disclosure may be applied.
FIG. 4 is a flowchart representing an intra prediction-based image encoding method.
FIG. 5 is a schematic diagram representing an intra predictor within an image encoding apparatus.

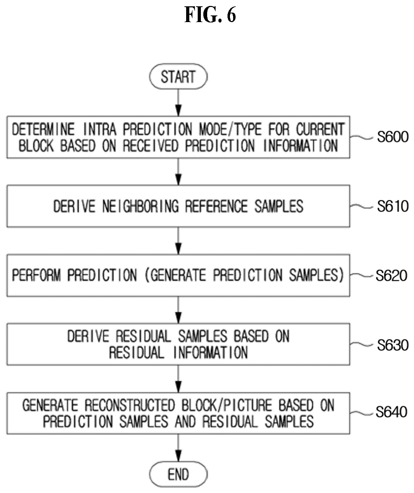

FIG. 6 is a flowchart representing an intra prediction-based image encoding method.

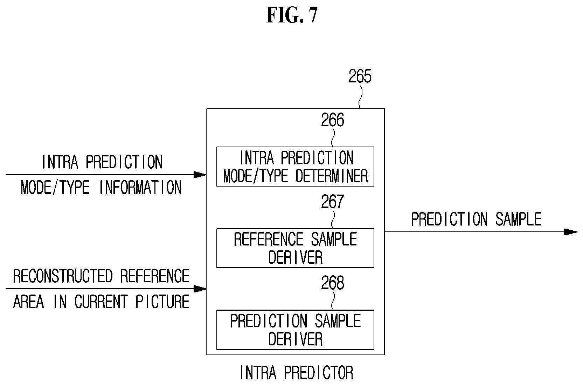

FIG. 7 is a schematic diagram representing an intra predictor within an image decoding apparatus.
FIG. 8 is a diagram for describing an example of neighboring blocks used to derive a CIIP weight.
FIG. 9 is a diagram for describing methods for partitioning a current block in CIIP.
FIG. 10 is a flowchart representing an image encoding method and an image decoding method according to an embodiment of the present disclosure.
FIG. 11 is a diagram for describing the positions of a block and a sample.
FIG. 12 is a diagram for describing categories used in CIIP.
FIG. 13 is a flowchart representing an image encoding method and an image decoding method according to another embodiment of the present disclosure.
FIG. 14 is a flowchart representing an image encoding method according to another embodiment of the present disclosure.
FIG. 15 is a flowchart representing an image decoding method according to another embodiment of the present disclosure.
FIG. 16 is a flowchart representing an image encoding method according to another embodiment of the present disclosure.
FIG. 17 is a flowchart representing an image decoding method according to another embodiment of the present disclosure.
FIG. 18 is a diagram illustratively representing a content streaming system to which an embodiment according to the present disclosure may be applied.

### [Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an M×N block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

### Overview of the video coding system

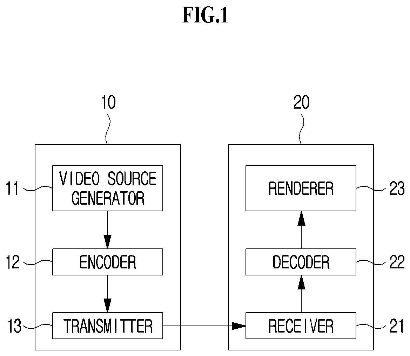

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoding apparatus 12, in which case the transmission apparatus may include at least one processor for obtaining the encoded video/image information or data in bitstream form and a transmitter for delivering it in the form of file or streaming. This receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

### Overview of the image encoding apparatus

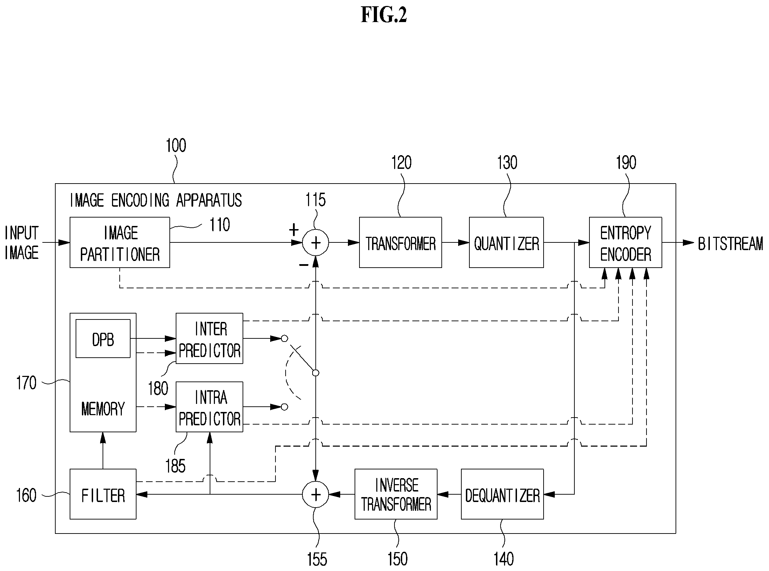

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

### Overview of the image decoding apparatus

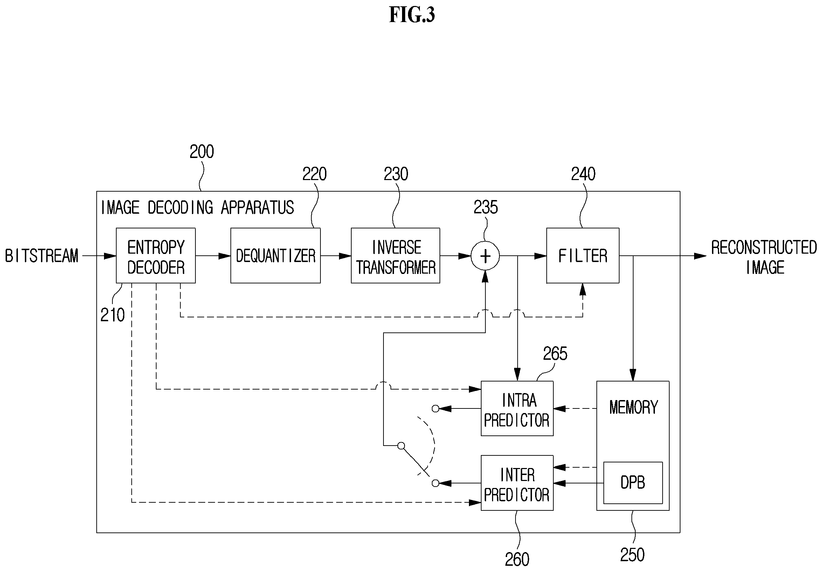

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

### General Intra Prediction

Intra prediction may refer to a prediction method which generates prediction samples for the current block based on reference samples within the picture to which the current block belongs (hereinafter, the current picture). When intra prediction is applied to the current block, neighboring reference samples to be used for intra prediction of the current block may be derived. The neighboring reference samples of the current block may include a total of 2×nH samples neighboring/adjacent to the left boundary and neighboring the bottom-left of the current block of nW×nH size, a total of 2×nW samples adjacent to the top boundary and neighboring the top-right of the current block, and one sample neighboring the top-left of the current block. Alternatively, the neighboring reference samples of the current block may include top neighboring samples of multiple columns and left neighboring samples of multiple rows. Additionally, the neighboring reference samples of the current block may include a total of nH samples neighboring a right boundary of the current block of a size of nWxnH, a total of nW samples neighboring a bottom boundary of the current block, and one sample neighboring a bottom-right of the current block.

However, some of the neighboring reference samples of the current block may not yet be decoded or may not be available. In this case, the image decoding apparatus 200 may construct the neighboring reference samples for prediction by substituting the unavailable samples with available samples. Alternatively, neighboring reference samples for prediction may be constructed through interpolation of the available samples.

When neighboring reference samples are derived, (i) prediction sample may be derived based on the average or interpolation of the neighboring reference samples of the current block, and (ii) prediction sample may be derived based on reference sample located in a specific (prediction) direction for prediction sample among the neighboring reference samples of the current block. Case (i) may be referred to as a non-directional mode or a non-angular mode, and case (ii) may be referred to as a directional mode or an angular mode. In addition, the prediction sample may be generated through interpolation between the first neighboring sample and the second neighboring sample located in the opposite direction of the prediction direction of the intra prediction mode of the current block based on the prediction sample of the current block among the neighboring reference samples. The above-described case may be referred to as linear interpolation intra prediction (LIP). Additionally, chroma prediction samples may be generated based on luma samples using a linear model. This case may be called an LM mode. Additionally, a temporary prediction sample of the current block may be derived based on filtered neighboring reference samples, and a prediction sample of the current block may be derived by calculating a weighted sum of at least one of a reference sample derived according to the intra prediction mode among the conventional neighboring reference samples, i.e. unfiltered neighboring reference samples, and the temporary prediction sample. The above-described case is referred to as Position-dependent intra prediction (PDPC). In addition, intra prediction encoding may be performed by selecting a reference sample line with the highest prediction accuracy among the multiple reference sample lines around a current block, deriving a prediction sample by using a reference sample located in a prediction direction from a corresponding line and indicating (signaling) a reference sample line used in this case to the image decoding apparatus 200. The above-described case may be referred to as multi-reference line (MRL) intra prediction or MRL-based intra prediction. In addition, a current block is partitioned into vertical or horizontal sub-partitions to perform intra prediction based on the same intra prediction mode and neighboring reference samples may be derived and used in the sub-partition unit. In other words, in this case, an intra prediction mode for a current block is applied equally to the sub-partitions, but by deriving and using a neighboring reference sample in the sub-partition unit, intra prediction performance may be improved in some cases. This prediction method is referred to as intra sub-partitions (ISP) or ISP-based intra prediction. The above-described intra prediction methods may be referred to as an intra prediction type separately from an intra prediction mode in Table of Contents 1.2. The intra prediction type may be referred to as various terms such as an intra prediction technique or an additional intra prediction mode, etc. For example, the intra prediction type (or an additional intra prediction mode, etc.) may include at least one of the above-described LIP, PDPC, MRL or ISP. A general intra prediction method that excludes a specific intra prediction type such as the LIP, the PDPC, the MRL, the ISP, etc. may be referred to as a normal intra prediction type. A normal intra prediction type may be generally applied when a specific intra prediction type described above is not applied, and prediction may be performed based on an intra prediction mode described above. Meanwhile, post-processing filtering may be performed on a derived prediction sample when necessary.

Specifically, the intra prediction procedure may include an intra prediction mode/type determination step, a neighboring reference sample derivation step, and an intra prediction mode/type-based prediction sample derivation step. Additionally, a post-filtering step may be performed on the derived prediction sample when necessary.

Meanwhile, in addition to the intra prediction types described above, affine linear weighted intra prediction (ALWIP) may be used. The ALWIP may also be referred to as linear weighted intra prediction (LWIP) or matrix weighted intra prediction or matrix-based intra prediction (MIP). When MIP is applied to a current block, prediction samples for the current block may be derived by i) using neighboring reference samples on which an averaging procedure has been performed, ii) performing a matrix-vector multiplication procedure, and iii) further performing a horizontal/vertical interpolation procedure when necessary. Intra prediction modes used for MIP may be configured differently from those used in LIP, PDPC, MRL, ISP intra prediction, or normal intra prediction described above. The intra prediction mode for MIP may be referred to as the MIP intra prediction mode, MIP prediction mode, or MIP mode. For example, the matrix and offset used in the matrix-vector multiplication may be set differently depending on the intra prediction mode for MIP. Here, the matrix may be referred to as (MIP) weight matrix, and the offset may be referred to as the (MIP) offset vector or (MIP) bias vector. A specific MIP method will be described later.

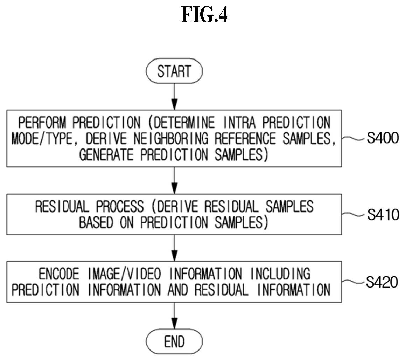

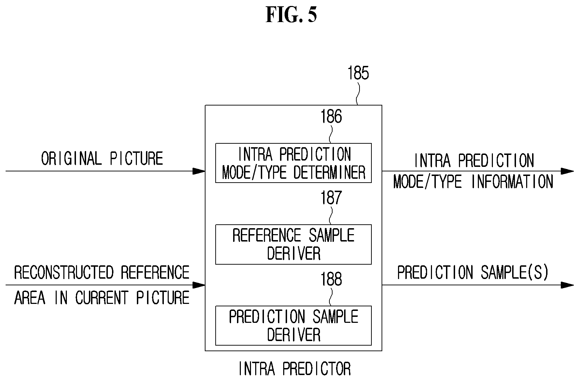

A block reconstruction procedure based on intra prediction and the intra predictor 185 within the image encoding apparatus 100 may schematically include, for example, FIGS. 4 and 5.

S400 may be performed by the intra predictor 185 of the image encoding apparatus 100 and S410 may be performed by the residual processor of the image encoding apparatus 100. Specifically, S410 may be performed by the subtractor 115 of the image encoding apparatus 100. At S420, prediction information may be derived by the intra predictor 185 and encoded by the entropy encoder 190. At S420, residual information may be derived by a residual processor and encoded by the entropy encoder 190. The residual information refers to information about the residual samples. The residual information may include information on the quantized transform coefficients of the residual samples. As described above, the residual samples are derived as transform coefficients through the transformer 120 of the image encoding apparatus 100, and the transform coefficients may be derived as quantized transform coefficients through the quantizer 130. The information on the quantized transform coefficients may be encoded in the entropy encoder 190 through the residual coding process.

The image encoding apparatus 100 performs intra prediction for a current block S400. The image encoding apparatus 100 may derive an intra prediction mode/type for a current block, may derive neighboring reference samples of a current block, and generates prediction samples within the current block based on the intra prediction mode/type and the neighboring reference samples. Here, the processes of determining an intra prediction mode/type, deriving neighboring reference samples and generating prediction samples may be performed simultaneously, or one process may be performed before another. For example, the intra predictor 185 of the image encoding apparatus 100 may include the intra prediction mode/type determiner 186, the reference sample deriver 187 and the prediction sample deriver 188, and the intra prediction mode/type determiner 186 may determine an intra prediction mode/type for the current block, the reference sample deriver 187 may derive the neighboring reference samples of the current block and the prediction sample deriver 188 may derive the prediction samples of the current block. Meanwhile, although not illustrated, when a prediction sample filtering process which will be described later is performed, the intra predictor 185 may further include a prediction sample filter (not shown). The image encoding apparatus 100 may determine a mode/a type applied to the current block among a plurality of intra prediction modes/types. The image encoding apparatus 100 may compare an RD cost for the intra prediction modes/types and determine an optimal intra prediction mode/type for the current block.

Meanwhile, the image encoding apparatus 100 may perform a prediction sample filtering process. Prediction sample filtering may be referred to as post-filtering. Through the prediction sample filtering process, some or all of the prediction samples may be filtered. In some cases, the prediction sample filtering process may be omitted.

The image encoding apparatus 100 generates residual samples for the current block based on (filtered) prediction samples S410. The image encoding apparatus 100 may compare the prediction samples with the original samples of a current block based on a phase and derive the residual samples.

The image encoding apparatus 100 may encode image information including information about the intra prediction (prediction information) and residual information about the residual samples S420. The prediction information may include the intra prediction mode information and the intra prediction type information. The image encoding apparatus 100 may output encoded image information in the form of a bitstream. An output bitstream may be transmitted to the image decoding apparatus 200 through a storage medium or a network.

The residual information may include a residual coding syntax, which will be described later. The image encoding apparatus 100 may derive quantized transform coefficients by transforming/quantizing the residual samples. The residual information may include information on the quantized transform coefficients.

Meanwhile, as described above, the image encoding apparatus 100 may generate a reconstructed picture (including reconstructed samples and reconstructed block). The image encoding apparatus 100 may perform dequantization/inverse transform on the quantized transform coefficients to derive (modified) residual samples. The reason for applying dequantization/inverse transform after transform/quantization of the residual samples is to derive the residual samples identical to the residual samples derived in the image decoding apparatus 200 as described above. The image encoding apparatus 100 may generate a reconstructed block including reconstructed samples for the current block based on the prediction samples and the (modified) residual samples. A reconstructed picture for the current picture may be generated based on the reconstructed block. As described above, an in-loop filtering process may further be applied to the reconstructed picture.

A video/image decoding procedure based on intra prediction and an intra predictor within the image decoding apparatus 200 may schematically include, for example, the following.

The image decoding apparatus 200 may perform operations corresponding to the operations performed in the image encoding apparatus 100.

S600 to S620 may be performed by the intra predictor 265 of the image decoding apparatus 200, and the prediction information in S600 and the residual information in S630 may be obtained from the bitstream by the entropy decoder 210 of the image decoding apparatus 200. The residual processor of the image decoding apparatus 200 may derive residual samples for the current block based on the residual information. Specifically, the dequantizer 220 of the residual processor may perform dequantization based on quantized transform coefficients derived based on the residual information to derive transform coefficients, and the inverse transformer 230 of the residual processor may perform inverse transform on the transform coefficients to derive residual samples for the current block. S640 may be performed by the adder 235 or the reconstructor of the image decoding apparatus 200.

Specifically, the image decoding apparatus 200 may derive the intra prediction mode/type for the current block based on the received prediction information (intra prediction mode/type information) S600. The image decoding apparatus 200 may derive neighboring reference samples of the current block S610. The image decoding apparatus 200 generates prediction samples within the current block based on the intra prediction mode/type and the neighboring reference samples S620. In this case, the image decoding apparatus 200 may perform a prediction sample filtering process. Prediction sample filtering may be referred to as post-filtering. Through the prediction sample filtering process, some or all of the prediction samples may be filtered. In some cases, the prediction sample filtering process may be omitted.

The image decoding apparatus 200 generates residual samples for the current block based on the received residual information. The image decoding apparatus 200 may generate reconstructed samples for the current block based on the prediction samples and the residual samples and derive a reconstructed block that includes the reconstructed samples S630. A reconstructed picture for the current picture may be generated based on the reconstructed block. As described above, an in-loop filtering process may further be applied to the reconstructed picture.

Here, the intra predictor 265 of the image decoding apparatus 200 may include the intra prediction mode/type determiner 266, the reference sample deriver 267 and the prediction sample deriver 268, and the intra prediction mode/type determiner 266 may determine the intra prediction mode/type for the current block based on the intra prediction mode/type information generated in the intra prediction mode/type determiner 186 of the image encoding apparatus 100 and signaled, the reference sample deriver 266 may derive neighboring reference samples of the current block, and the prediction sample deriver 267 may derive prediction samples of the current block. Meanwhile, although not illustrated, when the above-described prediction sample filtering process is performed, the intra predictor 265 may further include a prediction sample filter (not shown).

The intra prediction mode information may include, for example, flag information (i.e., intra_luma_mpm_flag) indicating whether the most probable mode (MPM) is applied to the current block or the remaining mode is applied, and when the MPM is applied to the current block, the prediction mode information may further include index information (i.e., intra_luma_mpm_idx) indicating one of the intra prediction mode candidates (MPM candidates). The intra prediction mode candidates (MPM candidates) may be configured as an MPM candidate list or an MPM list. Additionally, when the MPM is not applied to the current block, the intra prediction mode information may further include remaining mode information (i.e., intra_luma_mpm_remainder) indicating one of the remaining intra prediction modes excluding the intra prediction mode candidates (MPM candidates). The image decoding apparatus 200 may determine the intra prediction mode of the current block based on the intra prediction mode information. A separate MPM list may be constructed for the above-described MIP.

In addition, the intra prediction type information may be implemented in various forms. As an example, the intra prediction type information may include intra prediction type index information that indicates one of the intra prediction types. In another example, the intra prediction type information may include at least one of reference sample line information (i.e., intra_luma_ref_idx) indicating whether MRL is applied to the current block and, when MRL is applied, which reference sample line is used, an ISP flag information (i.e., intra_subpartitions_mode_flag) indicating whether ISP is applied to the current block; ISP type information (i.e., intra_subpartitions_split_flag) indicating the partitioning type of subpartitions when ISP is applied, a flag information indicating whether PDPC is applied, or a flag information indicating whether LIP is applied. Additionally, the intra prediction type information may include an MIP flag indicating whether MIP is applied to the current block.

The intra prediction mode information and/or the intra prediction type information may be encoded/decoded through a coding method described in this document. For example, the intra prediction mode information and/or the intra prediction type information may be encoded/decoded through entropy coding (e.g., CABAC, CAVLC) based on a truncated (rice) binary code.

### CIIP (combined inter and intra prediction)

CIIP may be applied to a current block. An additional flag (e.g., ciip_flag) may be signaled to represent whether a CIIP mode is applied to a current CU. For example, when a CU is coded in a merge mode, the CU includes at least 64 luma samples (i.e., the product of the width and height of a CU is greater than or equal to 64), and when both the width and height of a CU are less than 128 luma samples, the additional flag may be signaled to represent whether CIIP is applied to a current CU. As the name suggests, CIIP prediction may combine an inter prediction signal and an intra prediction signal. The inter prediction signal P_inter of a CIIP mode may be derived by using the same process as an inter prediction process applied to a regular merge mode. An intra prediction signal P_intra may be derived according to a regular intra prediction process using a planar mode. Then, an intra prediction signal and an inter prediction signal may be combined by using a weighted average. Here, a weight value may be calculated as follows, depending on the coding modes of a top neighboring block and a left neighboring block.
- When a top neighboring block is available and intra-coded, set isIntraTop as 1; otherwise, set isIntraTop as 0
- When a left neighboring block is available and intra-coded, set isIntraLeft as 1; otherwise, set isIntraLeft as 0
- When (isIntraTop + isIntraLeft) is equal to 2, set wt as 3
- Otherwise, when (isIntraTop + isIntraLeft) is equal to 1, set wt as 2
- Otherwise, set wt as 1

CIIP prediction may be configured as in Equation 1 below. ${P}_{CIIP} = \left(\left(4-wt\right)∗{P}_{inter}+wt∗{P}_{intra}+2\right) ≫ 2$

### Combination of CIIP and Template-based Intra Mode Derivation (TIMD) and Template Matching (TM) Merge

In a CIIP mode, prediction samples may be generated by weighting an inter prediction signal predicted by using a CIIP-TM merge candidate and an intra prediction signal predicted by using a TIMD-derived intra prediction mode. This method may be applied only to coding blocks with an area of 1024 or less.

A TIMD derivation method may be used to derive the intra prediction mode of CIIP. Specifically, an intra prediction mode with the smallest SATD within a TIMD mode list may be selected and mapped to one of the 67 regular intra prediction modes.

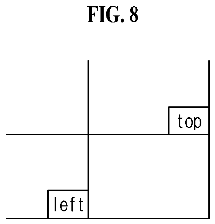

In addition, when a derived intra prediction mode is an angular mode, it may also be proposed to modify weights (wIntra, wInter) for two tests. For near-horizontal modes (2 <= angular mode index < 34), a current block may be vertically partitioned, as illustrated in FIG. 8(a). For near-vertical modes (34 <= angular mode index <= 66), a current block may be horizontally partitioned, as illustrated inFIG. 8(b).

The weights (wIntra, wInter) for different sub-blocks may be the same as in Table 1.

**[Table 1]**

| The sub-block index | (wIntra, wInter) |
|---|---|
| 0 | (6, 2) |
| 1 | (5, 3) |
| 2 | (3, 5) |
| 3 | (2, 6) |

When CIIP-TM is used, a CIIP-TM merge candidate list for a CIIP-TM mode may be constructed. The merge candidates may be refined through template matching. CIIP-TM merge candidates may be reordered into regular merge candidates through an ARMC method. The maximum number of CIIP-TM merge candidates may be 2.

### Embodiment

The present disclosure proposes a method for setting a weight by using a CIIP prediction method and a method for extending an available intra prediction mode by using a CIIP prediction method. According to embodiments proposed in the present disclosure, encoding performance of intra prediction may be improved.

Embodiments described below may be performed by the image encoding apparatus 100 or the image decoding apparatus 200. For example, an image encoding method described below may be performed by the image encoding apparatus 100 and an image decoding method described below may be performed by the image decoding apparatus 200.

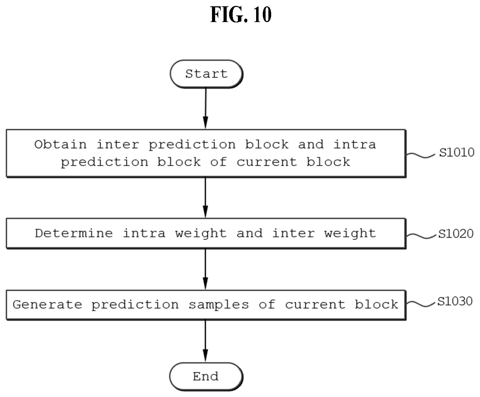

An image encoding method and an image decoding method according to an embodiment of the present disclosure are shown in FIG. 10.

**Referring** to FIG. 10, the intra prediction block of a current block and the inter prediction block of a current block may be obtained S1010. The intra prediction block of a current block may be obtained through intra prediction for a current block and the inter prediction block of a current block may be obtained through inter prediction for a current block.

A weight for the intra prediction block of a current block and a weight for the inter prediction block of a current block may be determined S1020. A weight for the intra prediction block of a current block may be referred to as 'intra weight' and a weight for the inter prediction block of a current block may be referred to as 'inter weight'.

The determined weights may be applied to the intra prediction block of a current block and the inter prediction block of a current block to generate prediction samples of a current block S1030. For example, prediction samples of a current block may be generated by applying an intra weight to the intra prediction block of a current block and applying an inter weight to the inter prediction block of a current block.

Hereinafter, embodiments proposed in the present disclosure are described in detail. Embodiments described below may be performed alone or in combination with two or more embodiments.

### Embodiment 1

Embodiment 1 relates to a method for deriving the intra weight and inter weight of CIIP.

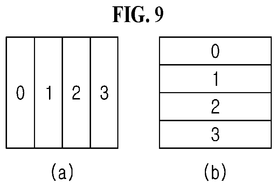

As illustrated in FIG. 9, in conventional CIIP, an intra prediction signal (an intra prediction block) may be predicted by using a TIMD-derived intra prediction mode. When a derived intra prediction mode is an angular mode, a current block may be partitioned into four sub-blocks in a vertical or horizontal direction according to whether this intra prediction mode is a horizontal intra prediction mode (2 <= angular mode index < 34) or a vertical intra prediction mode (34 <= angular mode index <= 66). For each sub-block from 0 to 3, as described through Table 1, an intra weight (wIntra) and an inter weight (wInter) may be allocated as fixed weights (6, 2), (5, 3), (3, 5), (2, 6), respectively.

However, since a weight change is not gradual at the boundary of sub-blocks, blocking artifact and compression efficiency loss may occur. In addition, classifying angular modes into only horizontal modes and vertical modes may be too coarse to capture a detailed pixel value change. Accordingly, a more accurate and detailed angular expression may lead to better coding efficiency.

In the present disclosure, in CIIP, an intra weight and an inter weight may be derived based on a sample distance from reference pixels, angular modes, a block size, the weight of a neighboring block, etc. This embodiment may provide better prediction performance than the conventional sub-block-based weight determination method described above. Generally, as a sample is closer to a block boundary, intra prediction may obtain more weights, and vice versa.

The following process represents a method for determining a weight factor depending on an intra prediction mode, a block size, a pixel position, etc.
(1) When an intra prediction mode is a horizontal mode (2 <= angular mode index < DIAG_MODE_IDX - N), an intra weight and an inter weight may be derived as in Equation 2.
   $\begin{matrix}wIntra = \left(width-x+offset1\right) ∗ scale / width + offset 2 \\ wInter = scale - wIntra\end{matrix}$
(2) When an intra prediction mode is a vertical mode (angular mode index > DIAG_MODE_IDX + N), an intra weight and an inter weight may be derived as in Equation 3.
   $\begin{matrix}wIntra = \left(height-y+offset1\right) ∗ scale / height + offset 2 \\ wInter = scale - wIntra\end{matrix}$
(3) When an intra prediction mode is a diagonal mode (i.e., when an angular mode index is within a range from DIAG_MODE_IDX - N to DIAG_MODE_IDX + N), an intra weight and an inter weight may be derived as in Equation 4.
   $\begin{matrix}wIntra = \left(\left(width-x\right)+\left(height-y\right)+offset1\right) ∗ scale / \left(width+height\right) + offset 2 , or \\ wIntra = \left(sqrt\left({\left(width-x\right)}^{2}+{\left(height-y\right)}^{2}\right)+offset1\right) / sqrt \left({width}^{2}+{height}^{2}\right) + offset 2 \\ wInter = scale - wIntra\end{matrix}$

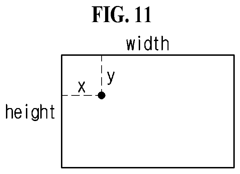

In Equations 2 to 4, x and y may represent the position of a sample within a current block, as shown in FIG. 11. In addition, as shown in FIG. 11, width-x and height-y may represent a sample distance. Specifically, width-x may represent a distance between the left boundary of a block and a sample, and height-y may represent a distance between the top boundary of a block and a sample. N represents a number between 0 and DIAG_MODE_IDX - HOR_MODE_IDX, and offset1 and offset2 may be a constant or changed according to a block size. Their effect is to adaptively determine a weight according to a block size. A weight may be clipped to the minimum and/or maximum range. A division operation may be substituted with a fixed-point operation.

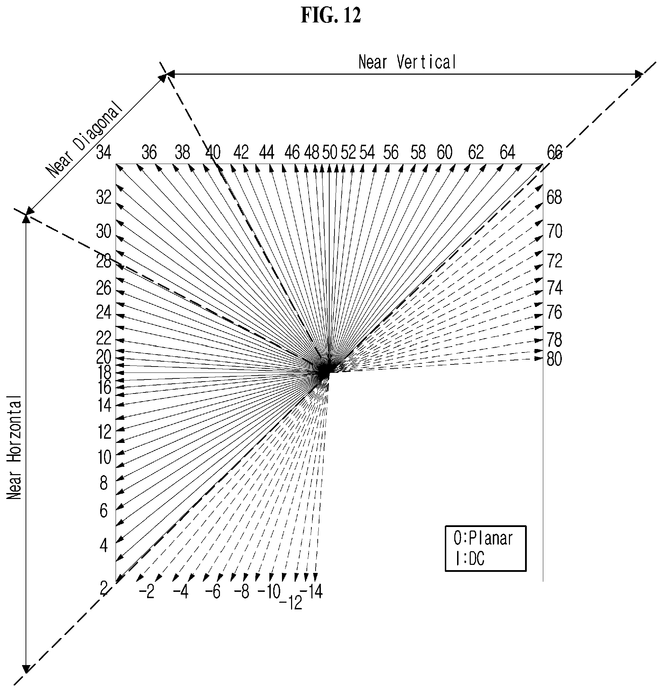

In Equations 2 to 4, angular modes may be classified into horizontal modes, vertical modes and diagonal modes, as shown in FIG. 12. However, a sample distance-based weight is not limited to this angular mode classification and may be calculated more accurately based on the angle of each angular mode.

As shown in Equations 2 to 4, an intra weight may be determined and applied in a sample unit within a current block (an intra prediction block). In addition, since an inter weight is determined by a difference between a predetermined value (scale) and an intra weight, an inter weight may also be determined and applied in a sample unit within a current block (an inter prediction block). Furthermore, an intra weight may be determined based on a distance between the boundary of a current block and a sample within a current block (width-x, height-y), the intra prediction mode of a current block (angular mode), the size of a current block (width, height), etc.

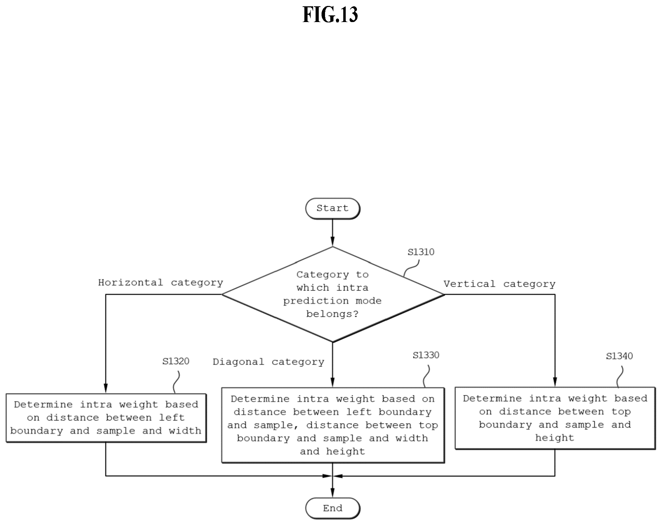

FIG. 13 is a diagram representing an example of an image encoding method and an image decoding method for determining a weight based on a category to which a weight belongs.

Referring to FIG. 13, a category to which an intra prediction mode belongs among the predetermined categories may be determined S1310. The predetermined categories may include a horizontal category (a horizontal mode), a vertical category (a vertical mode) and a diagonal category (a diagonal mode).

When an intra prediction mode belongs to a horizontal category, an intra weight may be determined based on a distance (width-x) between the left boundary of a current block and a sample within a current block and the width of a current block S1320. When an intra prediction mode belongs to a vertical category, an intra weight may be determined based on a distance (height-y) between the top boundary of a current block and a sample within a current block and the height of a current block S1340. When an intra prediction mode belongs to a diagonal category, an intra weight may be determined based on a distance (width-x) between the left boundary of a current block and a sample within a current block, a distance (height-y) between the top boundary of a current block and a sample within a current block, the width of a current block and the height of a current block. In S1320 to S1340, a current block may be a sub-block partitioned from a current block.

### Embodiment 2

Embodiment 2 relates to a method for performing CIIP by using an extended intra prediction mode.

In conventional CIIP, a flag (ciip_flag) representing a CIIP mode may be signaled in each CU unit and when ciip_flag is true (ciip_flag == 1), ciip_pdpc_flag may be additionally signaled. When ciip_pdpc_flag is true (ciip_pdpc_flag == 1), an intra (prediction) mode may be selected as a planar mode and otherwise (ciip_pdpc_flag == 0), an intra (prediction) mode may be determined by using an intra mode derived from TIMD.

The present disclosure proposes an improved CIIP encoding structure as follows by extending from deriving an intra (prediction) mode by using only a planar mode and TIMD from conventional CIIP.

First, ciip_flag may be signaled in a CU unit and when ciip_flag is true, index information may be signaled instead of ciip_pdpc_flag. Index information may represent an intra prediction mode selected among the predefined intra prediction modes (predetermined intra prediction mode candidates). For example, when predetermined intra prediction mode candidates are {PLANAR, HOR_MODE, VER_MODE, DIAG_MODE, DIMD, TIMD}, index information capable of selecting one of these six intra prediction mode candidates may be signaled, and an intra prediction mode to be used in a CIIP mode may be specified by using index information. As another example, when predetermined intra prediction mode candidates are {PLANAR, HOR_MODE, VER_MODE, DIAG_MODE, DIMD, TIMD, 66, 2}, index information capable of selecting one of these eight intra prediction mode candidates may be signaled, and an intra prediction mode candidate to be used in a CIIP mode may be specified by using index information. In examples above, six or eight predetermined intra prediction mode candidates represent examples, and according to embodiments, predetermined intra prediction mode candidates may be composed of values representing a specific intra prediction mode. Considering that a CIIP mode is used for inter prediction, 16 predetermined intra prediction mode candidates or less may be configured to reduce signaling overhead. Index information may be encoded by using truncated unary encoding or fixed length encoding.

Second, ciip_flag may be signaled in a CU unit and when ciip_flag is true, index information may be signaled instead of ciip_pdpc_flag. Index information may represent an intra prediction mode selected among the predefined intra prediction modes (predetermined intra prediction mode candidates). A set of predetermined intra prediction mode candidates may be referred to as a CIIP intra mode set. As an example, eight CIIP intra mode sets such as {PLANAR, HOR_MODE, VER_MODE, DIAG_MODE, DIMD, TIMD, 66, 2} may be used as a set of predetermined intra prediction mode candidates. A CIIP intra mode set may be updated in a CTU unit. As another example, a CIIP intra mode set may also be updated in a parameter set unit such as a high level syntax (HLS) such as a PPS or an SPS, etc. To signal a CIIP intra mode set, information about the number of intra prediction mode candidates within a CIIP intra mode set and the index value of each intra prediction mode candidate may be signaled.

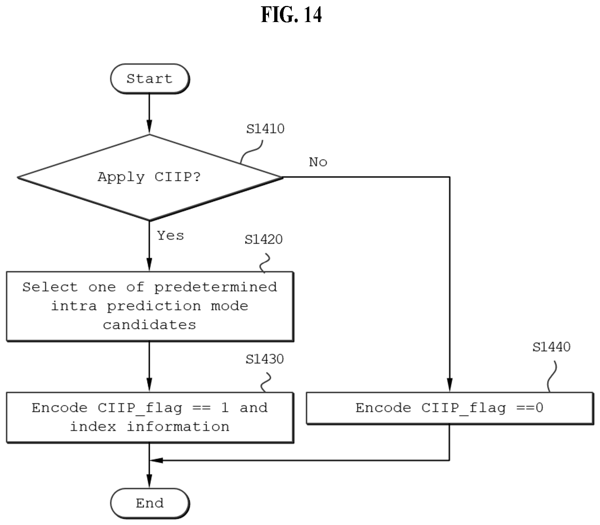

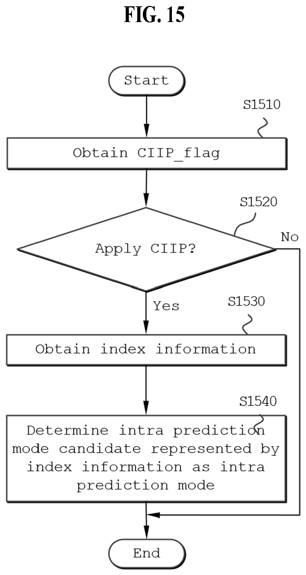

FIG. 14 is a diagram representing an example of an image encoding method for the first CIIP encoding structure and FIG. 15 is a diagram representing an example of an image decoding method for the first CIIP encoding structure.

Referring to FIG. 14, whether CIIP is applied to a current block may be determined S1410. When it is determined that CIIP is applied to a current block, an intra prediction mode to be used for CIIP may be selected among the predetermined intra prediction mode candidates S1420. In addition, index information representing a selected intra prediction mode and ciip_flag == 1 may be encoded into a bitstream S1430. On the contrary, when it is determined that CIIP is not applied to a current block, ciip_flag == 0 may be encoded into a bitstream S1440.

Referring to FIG. 15, ciip_flag may be obtained from a bitstream S1510 and whether CIIP is applied to a current block may be determined based on ciip_flag S1520. When it is determined that CIIP is applied to a current block (ciip_flag == 1), index information may be obtained from a bitstream S1530. Index information may represent one of the predetermined intra prediction mode candidates. Among the predetermined intra prediction mode candidates, an intra prediction mode candidate represented by index information may be determined as an intra prediction mode to be used for CIIP S1540.

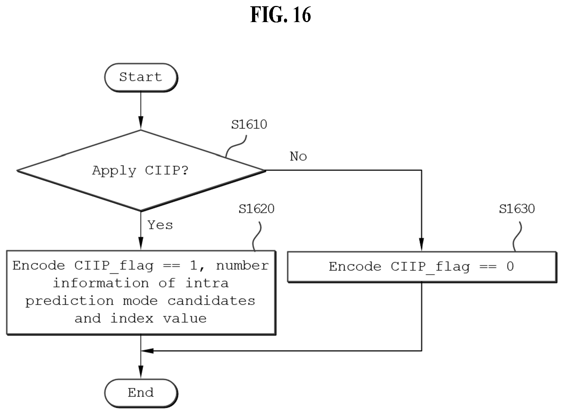

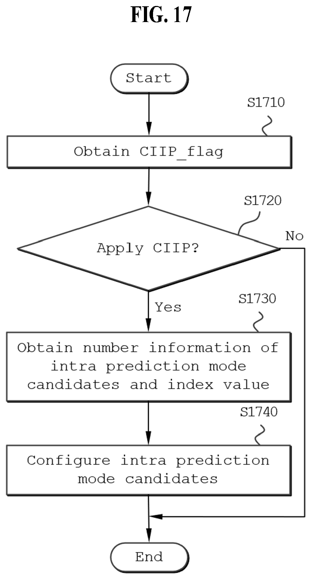

FIG. 16 is a diagram representing an example of an image encoding method for the second CIIP encoding structure and FIG. 17 is a diagram representing an example of an image decoding method for the second CIIP encoding structure.

Referring to FIG. 16, whether CIIP is applied to a current block may be determined S1610. When it is determined that CIIP is applied to a current block, number information representing the number of intra prediction mode candidates, the index value of each intra prediction mode candidate and ciip_flag == 1 may be encoded into a bitstream S1620. On the contrary, when it is determined that CIIP is not applied to a current block, ciip_flag == 0 may be encoded into a bitstream S1630.

Referring to FIG. 17, ciip_flag may be obtained from a bitstream S1710 and whether CIIP is applied to a current block may be determined based on ciip_flag S1720. When it is determined that CIIP is applied to a current block (ciip_flag == 1), number information and an index value may be obtained from a bitstream S1730. In addition, based on number information and an index value, intra prediction mode candidates (CIIP intra mode set) may be configured S1740.

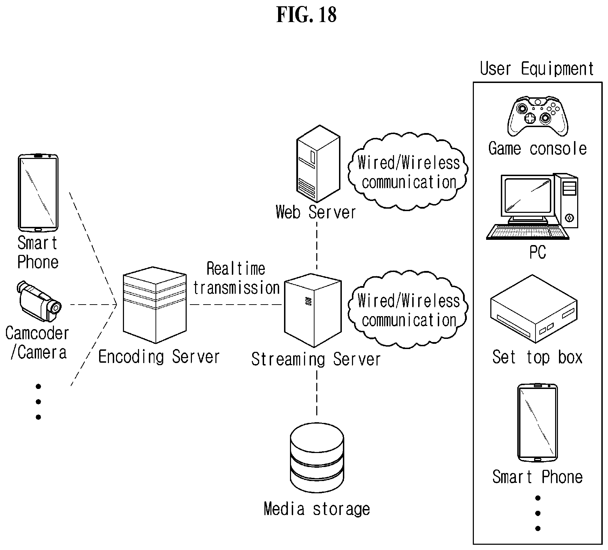

FIG. 18 shows an exemplary diagram of a content streaming system to which an embodiment of the present disclosure may be applied.

As shown in FIG. 18, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the image encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

### [Industrial Applicability]

The embodiments of the present disclosure may be used for encoding/decoding an image.

## Claims

1. An image decoding method performed by an image decoding apparatus, comprising:
obtaining an intra prediction block of a current block and an inter prediction block of the current block;
determining an intra weight for the intra prediction block and an inter weight for the inter prediction block; and
generating prediction samples of the current block by applying the intra weight to the intra prediction block and applying the inter weight to the inter prediction block,
wherein the intra weight is determined and applied in a sample unit within the intra prediction block, and the inter weight is determined and applied in a sample unit within the inter prediction block.

2. The method of claim 1, wherein the intra weight is determined based on a distance between a boundary of the current block and a sample within the current block, an intra prediction mode of the current block and a size of the current block.

3. The method of claim 2, wherein the intra weight is determined based on a category to which the intra prediction mode belongs among predetermined categories, and
wherein the predetermined categories include a horizontal category, a vertical category and a diagonal category.

4. The method of claim 3, wherein based on the intra prediction mode belonging to the horizontal category, the intra weight is determined based on a distance between a left boundary of the current block and the sample within the current block, and a width of the current block.

5. The method of claim 3, wherein based on the intra prediction mode belonging to the vertical category, the intra weight is determined based on a distance between a top boundary of the current block and the sample within the current block, and a height of the current block.

6. The method of claim 3, wherein based on the intra prediction mode belonging to the diagonal category, the intra weight is determined based on a distance between a left boundary of the current block and the sample within the current block, a distance between a top boundary of the current block and the sample within the current block, a width of the current block, and a height of the current block.

7. The method of claim 2, further comprising:
obtaining index information from a bitstream; and
determining an intra prediction mode candidate represented by the index information among predetermined intra prediction mode candidates as the intra prediction mode.

8. The method of claim 7, wherein a number of the intra prediction mode candidates is less than or equal to 16.

9. The method of claim 7, wherein the intra prediction mode candidates are updated in a coding tree unit (CTU) or parameter set unit.

10. The method of claim 7, wherein number information of the intra prediction mode candidates and an index value of each intra prediction mode candidate are obtained from the bitstream.

11. An image encoding method performed by an image encoding apparatus, comprising:
obtaining an intra prediction block of a current block and an inter prediction block of the current block;
determining an intra weight for the intra prediction block and an inter weight for the inter prediction block; and
generating prediction samples of the current block by applying the intra weight to the intra prediction block and applying the inter weight to the inter prediction block,
wherein the intra weight is determined and applied in a sample unit within the intra prediction block, and the inter weight is determined and applied in a sample unit within the inter prediction block.

12. A computer-readable recording medium for storing a bitstream generated by an image encoding method, the image encoding method comprising:
obtaining an intra prediction block of a current block and an inter prediction block of the current block;
determining an intra weight for the intra prediction block and an inter weight for the inter prediction block; and
generating prediction samples of the current block by applying the intra weight to the intra prediction block and applying the inter weight to the inter prediction block,
wherein the intra weight is determined and applied in a sample unit within the intra prediction block, and the inter weight is determined and applied in a sample unit within the inter prediction block.

13. A method for transmitting a bitstream generated by an image encoding apparatus, the image encoding method comprising:
obtaining an intra prediction block of a current block and an inter prediction block of the current block;
determining an intra weight for the intra prediction block and an inter weight for the inter prediction block; and
generating prediction samples of the current block by applying the intra weight to the intra prediction block and applying the inter weight to the inter prediction block,
wherein the intra weight is determined and applied in a sample unit within the intra prediction block, and the inter weight is determined and applied in a sample unit within the inter prediction block.
